# EUROPEAN PATENT SPECIFICATION

(11) **EP 3 673 733 B1**
(45) Date of publication and mention of the grant of the patent: **23.08.2023**
(21) Application number: 18804032.3
(22) Date of filing: 23.08.2018
(51) Int. Cl.: A01M 1/20, A01M 1/02, A01M 29/12

(54) **DEVICE FOR THE CONTROLLED RELEASE AND/OR CONTROLLED DELIVERY OF CONTROL AGENTS FOR COMBATING ARTHROPODS, AND USE THEREOF**
VORRICHTUNG FÜR DIE KONTROLLIERTE FREISETZUNG UND/ODER ABGABE VON SUBSTANZEN ZUR BEKÄMPFUNG VON ARTHROPODEN, SOWIE DEREN VERWENDUNG
DISPOSITIF POUR LA LIBÉRATION CONTRÔLÉE ET/OU L'ADMINISTRATION CONTRÔLÉE D'AGENTS DE LUTTE CONTRE LES ARTHROPODES, ET UTILISATION DE CELUI-CI

(30) Priority: 25.08.2017 ES 201731048
(43) Date of publication of application: 01.07.2020
(73) Proprietor: Ecologia Y Proteccion Agricola, S.L., 46240 Carlet (ES)
(72) Inventor: NAVARRO FUERTES, Ismael, 46240 Carlet (ES); VACAS GONZÁLEZ, Sandra, 46022 Valencia (ES); NAVARRO LLOPIS, Vicente, 46022 Valencia (ES); MARZO BARGUÉS, Javier, 46240 Carlet (ES); PRIMO MILLO, Jaime, 46022 Valencia (ES); CARBONELL GARCIA, Alejandro, 46240 Carlet (ES)
(74) Representative: Isern Patentes y Marcas S.L.
(86) International application number: PCT/ES2018/070568
(87) International publication number: WO 2019/038462

(56) References cited:
- EP-A1- 0 540 932
- EP-A1- 0 645 081
- WO-A1-2012/107472
- WO-A1-2016/187274

## Description

The present invention is based on a device for the simultaneous controlled release and/or controlled delivery of at least two control agents contained in at least one container for combating arthropods, preferably by means of a passage regulating means equipped with activation means that enable said control agents to be released at a substantially constant rate.

Additionally, this invention also relates to the use of said device for the simultaneous controlled release and/or controlled delivery of at least two arthropod control agents.

### Background of the invention

Living organisms use the information they perceive from the environment in the form of chemical compounds to increase their well-being or ensure both their survival and that of their species, for example, to locate food sources, locate individuals of the same species or avoid predators. This form of communication acquires a special relevance in the case of insects, it being essential for mating in some cases. The chemical compounds responsible for these interactions, whether between individuals of the same species (i.e. intraspecific interactions) or between individuals of different species (i.e. interspecific interactions), are known as semiochemical (Agelopoulos et al Pesticide Science 1999, 55, 225-235).

The semiochemical compounds that mediate intraspecific interactions are known as pheromones, wherein the beneficiary can be the organism emitting said chemical compounds, the receiver or both. Moreover, the semiochemical compounds that mediate interspecific interactions are known as allelochemical compounds. Three types of allelochemical compounds are known:
- Allomone: benefit the originator.
- Kairomones: benefit the receiver but not the originator.
- Synomones: receiver and originator benefit, e.g. synomones for pollination mediation.

Semiochemicals are commonly volatile organic compounds, which enables them to be captured by the insect's sense of smell, wherein an electrical signal is subsequently produced that is translated as a perception of the central nervous system. As a result, a change in the physiological behaviour of the insect can be triggered, an aspect which is of special interest in the field of controlling pests, and in ecology in general, given that these semiochemicals are capable of generating a highly complex communication system between plants and groups of pollinators, herbivorous insects, and the parasites and predators thereof (Unsicker et al Curr. Opin. Plant. Biol. 2009, 12, 479-485).

Said semiochemical compounds, in particular, sex or aggregation pheromones, are widely used in the sector for controlling insect pests, in particular, to monitor insect populations in order to determine the presence or absence thereof in an area, as well as the density thereof. Said monitoring can be essential in integrally managing insect pests.

These sex pheromones can also be used to control pests by means of different techniques, one of them being to cause a disruption in the communication (i.e. mating disruption) between male and female insects, which prevents or delays mating. As a result, fertile eggs are not laid, such that crop damage is prevented because the same do not hatch. As a result, the populations of these insects are gradually reduced in a substantial manner, significantly reducing the damage they produce. This technique has been particularly successful in the case of the lepidoptera family, and is carried out by releasing a significant amount of pheromone in a wide area. Generally, the pheromone overexcites or saturates, during a period of time, the receptors of the antennae of the male insects, which can no longer find females to mate with, meaning that reproduction of the species is slowed. In general, the amount of sex pheromone used per hectare is high, for example, around 100 g for the grapevine moth (*Lobesia botrana*). The pheromone is commonly distributed in a number of emission points that is greater than or equal to 100 per hectare.

Additionally, it is known in the state of the art that in order for the communication disruption method to be effective, the semiochemical (e.g. sex pheromone) must be released in a certain amount and during a certain period of time (i.e. that is ongoing and at a constant emission rate). Therefore, the emission device of this pheromone must fulfil this requirement for two reasons: to ensure the correct operation of the technique and to prevent unnecessary waste of sex pheromone, since the associated manufacturing cost thereof tends to be very high compared to traditional pesticides, which limits the use of these substances in some cases.

There are different semiochemical dispensing methods, which can be grouped into two types. The first of them can be classified as a matrix, wherein the pheromone is absorbed in a solid matrix, the dispensing thereof being passive. In the second type, the pheromone is contained in a tank, the dispensing thereof being carried out passively or actively. In general, for an average treatment period of 120 days, these devices must release a pheromone amount comprised between 4 and 10 mg/day and emit depending on the insect species. However, although some of these systems acceptably adjust the emission of the sex pheromone to the dosages required for the mating disruption technique, the majority of the semiochemical dispensing methods currently available do not fulfil these requirements due to the fact that, in general, they are adjusted to an exponential and non-linear release kinetics, such that the semiochemical is released too fast, and as a result of the same, said semiochemical available in the dispenser or device is depleted in a relatively short period of time.

Furthermore, in other dispersing methods, the problem lies in a fluctuating release of the semiochemical (e.g. due to variation of the emission with the temperature) such that sometimes the amount dispersed into the atmosphere is too high, wasting active ingredient, while in others it can be so low that it no longer interacts with the insects and the desired effect is lost.

In the field of pest control, in addition to the use of pheromones for the aforementioned monitoring of insect populations, the technique of mass trapping or attraction and damage, whether by death, infection or sterilisation of the insects, is also common, although to a lesser degree. In both cases, the attraction exerted by a sex pheromone towards the emission point enables the trapping and/or death of a significantly high number of insects of the species to be controlled. In this regard, the emission dosages required to use these two techniques are particularly relevant, and in general are several orders of magnitude lower than those described for the mating disruption technique discussed above. This emission is critical and must enable the efficient attraction of the insect to the emission point since a lower dosage would not produce the desired effect and a higher dosage could cause excessive blocking of the receptors of the insect, preventing it from accurately finding the emission point. Additionally, these techniques tend to require long emission periods that cover, at least in the attraction and damage techniques, the crop cycle, meaning that a device suitable for these techniques must fulfil the requirements of having an emission at lower concentrations with substantially constant emission rates.

However, the devices containing sex pheromones for attraction that can currently be found on the market are of the matrix type, wherein a polymer (e.g. rubber or silicones) is impregnated with a dosage in the range comprised between 0.5 mg and 1 mg of pheromone; the duration of which in the field is around two weeks, although the emission kinetics thereof is not linear, but exponential, and with relatively high waste loads, which means the effectiveness thereof falls rapidly over time. In addition, if they can be used for an attraction and damage technique, this would require the use of several replacements of the same in the same crop cycle, which is economically unacceptable.

The inclusion of a toxic composition in this type of device is very interesting given that it enables a drastic reduction in the amount of insecticide per hectare compared to conventional chemical control, although it has another technical challenge that is not solved in current devices. In general, the devices that are marketed for this purpose have a composition that is impregnated, absorbed or mixed in a medium that is toxic for insects. This toxic combination is exposed to environmental agents (i.e. light and oxygen), which tend to degrade the active ingredients with insecticide activity. For example, the sensitivity of a large number of pyrethrins and pyrethroids to ultraviolet radiation is well known in the sector. Likewise, physical factors such as dust, abrasion or the use of formulations sprayed (e.g. with mineral oils) on the crop itself to treat other pests often reduce the toxic effect of the device, which in turns results in a reduction of the effectiveness of the technique used with semiochemicals. Additionally, a partial toxic effect can promote the onset of resistance to the insecticide substance which is completed unwanted. Moreover, all the factors mentioned above are worsened as the useful life of the devices is intended to be lengthened.

It must also be mentioned that, given the usually high number of emission points per hectare that are used in the attraction and damage techniques, it is an essential requirement for the applicability thereof for these devices to have field durability that covers the crop cycle, and therefore the manufacture and final costs are economically affordable. Lastly, the need for these devices to ensure the safety at all times of the applicator must be noted, due to the fact that there are insecticide substances between the components thereof. Thus, the applicator must be prevented, at all times, from coming into contact with toxic chemicals that may potentially be harmful to health, minimising the risk for operators that are responsible for installing these systems.

In this context, patent EP 0194896 describes a cylinder-shaped device made of low-density polyethylene and at least partially covered by a membrane essentially consisting of polyethylene, polypropylene, or any of the copolymers thereof, which is sealed at both ends once the sample of pheromone-type active ingredient in solution is inserted. This device enables the reduction of fluctuations associated with the effect of increasing the outside temperature since the solvent expands, with the resulting reduction in the concentration, but at the same time the release rate of the product is increased. However, heavy solar exposure could lead to the expansion and even breakage of the container, along with the entailed risks.

Document EP 0496102 describes a device for the slow and continuous release of pheromones of the type of product known as sex lures, which comprise several containers made from synthetic material with a specific thickness; this device also enabling the simultaneous release of different pheromones in order to simultaneously control several pests. However, in order for the release to be carried out at a suitable rate, the pheromone containers must meet strict size specifications (i.e. a surface-volume ratio of 2 to 8 cm⁻¹) and weight specifications (i.e. weight of the synthetic material by volume per inner chamber at 1.5 g/m³). This size limitation can result in, for example, not having enough pheromones to complete a full treatment and effectively combat the most serious insect pests.

Moreover, patent US 6109537 shows a device for releasing volatile substances into the environment comprising a receptacle containing said substances, a selectively permeable membrane, a release rate mechanical modulator, and filter paper located inside the receptacle onto which the volatile substance is pipetted. This mechanical modulator is a perforated plate comprising a plurality of holes distributed uniformly on the surface thereof, which act as channels through which the substance circulates in a relatively consistent flow. However, the compatibility between the membrane and the mechanical modulator itself in this device is essential, which limits the possible materials suitable for the application thereof. In addition, the use of the device is complex given that the substance must be applied on the filter paper, and this can also entail certain risks for the health of the person responsible for the application, due to their exposure to the chemical products that can be toxic to humans.

Document WO 2012/107472 A1 describes a device based on the viscosity of the liquid or mixtures, for the simultaneous controlled release and delivery of at least a semiochemical compound and at least a toxic compound. The device comprises a container in which the volatile substances are housed, a tube that connects said container to the atmosphere and which can connect to a substrate.

Document EP 0540932 A1 describes a device for the controlled delivery of sexual pheromones composed of a pheromone reservoir impermeable to the pheromone closed by a pheromone-permeable film which is responsible for the pheromone delivery.

Document WO 2016/187274 A1 describes a device for evaporative delivery of volatile substances. The device includes a reservoir containing a liquid volatile substance having an open cavity with a peripheral portion; a microporous membrane in contact with the volatile substance positioned over the reservoir, and a removable cap layer having an adhesive layer such that the membrane is sealed.

Document EP 0645081 A1 describes a device suitable to repel or kill insects. The device comprises a container in the shape of a dish comprising an essential oil mixed with a diffusion adjuvant, the open face of which has a flat edge, a sheet of plastic which is impermeable to liquids and permeable to the vapors of essential oils at room temperature, this sheet being fastened to the flat edge of the transparent container and a protective detachable covering film of adhesive plastic.

Therefore, new devices for the controlled release of semiochemical compounds that ensure the correct dosage of one or several of these substances simultaneously, as well as one or more toxic compounds, during the useful life of the device are needed.

### Detailed description of the invention

The object of the present invention relates to a device for the simultaneous controlled release and/or controlled delivery of control agents for combating arthropods,

In the context of the present invention, "control agent" is understood as any chemical compound selected from among the group consisting of semiochemical compounds, toxic compounds and any of the mixtures or formulations thereof, preferably of pesticide type, which can affect pest species by means of different modes of action, such as attraction, repellency, mating disruption, sterilisation or death.

Furthermore, the expressions "substantially constant rate" or "substantially constant emission rate" mean that the value of the rate parameter experiences a sufficiently small variation over time so as to be susceptible of being considered equivalent to a constant rate, in the context of the present invention, without necessarily being equal.

In the present invention, the expression "passage regulating means" is understood as any material capable of controlling the diffusion of the molecules corresponding to control agents, causing a controlled release and/or replacement of the same depending on the vapour pressure thereof.

In the present invention, the expression "fluid communication means" relates to any solid or fluid means that enables the control agents contained in the at least one container to be connected to the at least one passage regulator. By way of illustration and not limitation, said fluid communication means can consist of one or more channels or tubes of different sizes and/or shapes depending on the specific use, e.g. of the desired diffusion rate, or the replacement rate of toxic agents on the surface of the passage regulating means.

A first embodiment provides a device for the simultaneous controlled release and/or controlled delivery of at least two control agents for combating arthropods, of which at least one is a semiochemical compound and at least one is a toxic compound, characterised in that it comprises at least one container containing the control agents, at least one passage regulating means of said two or more control agents, and activation means of said at least one passage regulating means, wherein:
- said at least one container comprises one or more fluid communication means configured to enable the transfer of fluids between said at least one container and said at least one passage regulating means,
- said at least one passage regulating means defines a controlled release and/or delivery surface of said at least two control agents, and
- said activation means of said at least one passage regulating means are configured for the controlled actuation thereof.
- said toxic compound is selected from among the group consisting of insecticides that act on the growth and development of insects, insecticides that act on the nervous or muscle system of insects, insecticides that act on the respiration of insects, insecticides that act on the digestive system of insects and insecticides with non-specific inhibitors or any of the combinations thereof; and
- said at least one passage regulating means is configured to release and/or 25 deliver in a controlled manner said at least one semiochemical compound with an average flow comprised between 1 ng/day and 10 g/day, and said at least one toxic compound with an average flow comprised between 1 ng/day and 25 mg/day.

Said at least one container is impermeable to the control agents to prevent the undesired and uncontrolled loss of said agents. In a preferred embodiment, said at least one container is made of a material that is impermeable to the control agents; more preferably, said at least one container is made of an impermeable material that is a metal material; still more preferably, said at least one container is made of an impermeable material that is a metal material containing aluminium; even more preferably, said at least one container is made of an impermeable material that is a metal material consisting of aluminium.

In an alternative embodiment, said at least one container is made of an impermeable material containing a metal polymer.

In an alternative embodiment, said at least one container is made of a first material that is at least partially permeable to the control agents, said container being covered by a second material that is impermeable to the control agents. Particularly, said at least one container can be made of a first material that is completely permeable to the control agents, said container being covered by a second material that is impermeable to the control agents.

Preferably, any of the embodiments described above in relation to the characteristics of the container that is impermeable or partially permeable to the control agents provides opacity to said container; this characteristic advantageously prevents the photodegradation of the control agents contained in said containers.

Moreover, this at least one container comprises one or more fluid communication means with at least one passage regulating means, the function of which is to ensure the communication between the container and the passage regulating means, thus enabling the transfer of the control agents used for the controlled release and/or controlled delivery from said container to said passage regulating means.

The present invention provides a device wherein two or more control agents can be simultaneously delivered to control arthropods, of which at least one is a semiochemical compound and at least one is a toxic compound. As such, in different embodiments of this aspect of the invention, it is possible to simultaneously deliver at least one semiochemical compound and several toxic compounds, or vice versa, that is, simultaneously at least one toxic compound and several semiochemical compounds. These aspects highlight the versatility of the device, which is especially advantageous for use in the treatment of different arthropods, with different requirements in terms of compound emission time, diffusion rate, diffusion range, semiochemical combinations to cause synergism, etc.

Likewise, it will be clear from the present description that the device can contain only one container wherein all the control agents selected for the controlled release and/or controlled delivery thereof are kept, or can contain several containers, which enables, for example, said one or more semiochemical compounds and said one or more toxic compounds to be stored independently. This last aspect is especially advantageous in combinations of control agents wherein the compounds are chemically incompatible with each other, thus preventing undesired reactions.

This device of the present invention can also contain one or more containers, which contain the control agents, with different thicknesses, sizes and shapes to each other, enabling different embodiments of the invention that serve for the attraction and death treatment, or to monitor arthropods, especially adapted for each target species and space.

By way of illustration, but not limitation, said one or more semiochemical compounds used in the context of the present invention can be selected from among the group consisting of:
a) Carboxylic acids with a number of carbon atoms comprised between 2 and 40 (i.e. chemical compound containing at least one terminal carboxyl functional group), which can be linear or cyclic, and can be optionally substituted by one or more substituents, or any of the salts thereof.
b) Carboxylic esters with a number of carbon atoms comprised between 2 and 40 (i.e. chemical compound containing at least one carboxyl functional group), which can be linear or cyclic, and can be optionally substituted by one or more substituents,
c) Hydrocarbons, which can be saturated or unsaturated (i.e. alkenes or alkynes with different saturation levels) with a number of carbon atoms comprised between 2 and 40, which are linear or cyclic, and can be optionally substituted by one or more substituents,
d) Ketones (i.e. chemical compound containing at least one carbonyl functional group) with a number of carbon atoms comprised between 3 and 40, which are linear or cyclic, and can also be optionally substituted by one or more substituents, and can optionally include one or more heteroatoms, preferably nitrogen, in the skeleton thereof,
e) Quinones of general formula 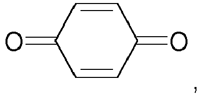 optionally substituted by one or more substituents,
f) Alcohols (i.e. chemical compounds containing at least one hydroxyl group) with a number of carbon atoms comprised between 3 and 40, which can be primary (i.e. ROH), secondary (*i*.*e*. RR'OH) or tertiary (*i*.*e*. RR'R"OH), which are linear or cyclic, and can also be optionally substituted by one or more substituents,
g) Amines with a number of carbon atoms comprised between 0 (*i.e.* ammonia) and 40, which can be primary (i.e. RNH₂), secondary (i.e. RR'NH) or tertiary (i.e. RR'R"NH), which are linear or cyclic, and can also be optionally substituted by one or more substituents or any of the salts thereof,
h) Aldehydes (i.e. chemical compound containing at least one aldehyde functional group) with a number of carbon atoms comprised between 1 and 40, optionally substituted by one or more substituents,
i) Epoxides with a number of carbon atoms comprised between 8 and 40, which are linear or cyclic, and can also be optionally substituted by one or more substituents,
j) Spiroacetals and dioxide-type compounds, of general formula 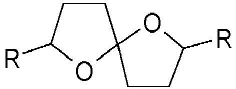 and with a number of carbon atoms comprised between 7 and 40,
k) Sulphur compounds containing at least one sulphur compound in the skeleton thereof, or any of the salts thereof.
l) Linear or branched ethers containing at least one oxygen atom, and can optionally have a cyclic or heterocyclic structure, e.g. ethyl furfuryl ether, or
any of the mixtures thereof.

Said one or more substituents, particularly the radicals R, R' and R" described above, are independently selected from among the group consisting of optionally substituted alkyl, optionally substituted alkenyl, optionally substituted alkynyl, optionally substituted aryl, optionally substituted heteroaryl, optionally substituted cycloalkyl, optionally substituted heterocycloalkyl or optionally substituted silyl, wherein said one or more optional substituents are in turn independently selected from among the group consisting of alkyl, alkenyl, alkynyl, aryl, heteroaryl, cycloalkyl, heterocycloalkyl, acyl, carboxyl, halide, hydroxyl, ether, nitro, cyano, amide, amino, acylamide, acyloxide, thiol, thioether, sulfoxide, sulfonyl, thioamide, sulfonamide or silyl.

In the context of the present invention, "alkyl group" is understood as any monovalent saturated hydrocarbon with a linear or branched chain, which can optionally be cyclic or include cyclic groups, which can optionally include one or more heteroatoms in the skeleton thereof selected from among nitrogen, oxygen or sulphur, and which can optionally be selected from among halogen, hydroxyl, alcoxyl, carboxyl, carbonyl, cyano, acyl, alkoxycarbonyl, amino, nitro, mercapto and alkylite. Examples of alkyl groups include, but are not limited to, methyl, ethyl, n-propyl, isopropyl, n-butyl, isobutyl, tert-butyl, n-pentyl, cyclopentyl, cyclohexyl or cycloheptyl.

In the present invention, "aryl group" is understood as an aromatic hydrocarbon that preferably contains a number of carbon atoms comprised between 3 and 12 carbon atoms, more preferably between 6 and 12 carbon atoms, such as for example, cyclopropenyl, phenyl, tropyl, indenyl, napthtyl, azulenyl, biphenyl, fluorenyl or anthracenyl. This aryl group can be optionally substituted by one or more substituents that are selected from among alkyl, haloalkyl, aminoalkyl, dialkylamino, hydroxyl, alkoxide, phenyl, mercapto, halogen, nitro, cyano or alkoxycarbonyl. Optionally, said aryl group can include one or more heteroatoms in the skeleton thereof selected from among nitrogen, oxygen or sulphur.

Preferably, said at least one semiochemical agent is selected from among the group consisting of 3-methyl-6-isopropenyl-9-decenyl acetate, (*Z*)-3-metyl-6-isopropenyl-3,9-decadienyl acetate, (*E*,*Z*)-7,9-dodecadienyl acetate, (Z)-9-dodecenyl acetate, (3*E*,8*Z*,11*Z*)-tetradecatrienyl acetate (i.e. commonly referred to as TDTA), (*Z*)-9-hexadecenal, (*Z*)-11-hexadecenal, (*Z*)-13-octadecenal, (*E*,*Z*)-7,9-dodecadien-1-ol, (3*S*,6R*S*)-3-methyl-6-isopropenyl-9-decen-1-yl, trimethylamine chlorhydrate, 1,4-butanediamine (i.e. commonly referred to as putrescine), (*S*)-5-methyl-2-(prop-1-en-2-yl)-4-hexenyl 3-methyl-2-butenoate,[(1*R*,3*R*)-3-isopropenyl-2,2-dimethylcyclobutyl]methyl-3-methyl-3-methyl-butanoate, (1*R*,3*R*)-(+)-cis-2,2-dimethyl-3-isopropenylcyclobutano methanol, [(*R*)-2,2-dimethyl-3-(1-methylethylidene)cyclobutyl]methyl (S)-2-methylbutanoate, 2-[(1*R*,2*S*)-*cis*-2-isopropenyl-1-(4'-methyl-4'-pentenyl)-cyclobutane]ethyl acetate, 3,3,7-trimethyl-2,9-dioxatricyclo[3.3.1.04,7]nonane or ammonium acetate.

Said semiochemical compounds can be dispensed in pure state (i.e. without diluting, in the case of a liquid semiochemical compound), or be dissolved in a solvent, which contributes to the dragging of the semiochemical itself, notwithstanding the fact that the solvent can in turn be a semiochemical. In this second case, the dilution is considered an additional factor that must be taken into account, in addition to the passage rate through the passage regulating means, or for example, the thickness of said means, when the emission rate is determined. All these aspects are especially relevant in a particular embodiment wherein the semiochemical compounds that are diffused are gases such as ammonia and the derivatives thereof, or for example, gases that are generated by salt decomposition or hydrolysis.

According to the present invention, the toxic compound is selected from among the group consisting of insecticides that act on the growth and development of insects (e.g. juvenile hormone mimetic insecticides or chitin biosynthesis inhibitors), insecticides that act on the nervous or muscle system of insects (e.g. acetylcholinesterase inhibitor), insecticides that act on the respiration of insects (e.g. ATP-mitochondrial synthase inhibitors), insecticides that act on the digestive system of insects (e.g. microbial disruptors of insect digestive membranes), insecticides with an unknown or uncertain mode of action such as non-specific inhibitors (i.e. multisite inhibitors) or any of the combinations thereof.

Preferably, said one or more toxic compounds belong to the family of chemical compounds called pyrethroids. Said pyrethroids are synthetically obtained chemical compounds that have a chemical structure that is similar to that of pyrethrins, which are organic compounds that are naturally found in certain flowers, e.g. plants of the genus *Chrysanthemum,* such as *Chrysanthemum cinerariaefolium.* Pyrethroids are more toxic than pyrethrins, and have a relatively short persistence. In the insect, they act on the central nervous system through contact and ingestion, exciting the insect at a muscular level and finally causing death through muscle contraction.

Illustrative examples of known pyrethroids that can be used as said one or more toxic agent include, but are not limited to:
a) n-phenoxybenzyl 3-(2,2-dichlorovinyl)-2,2-dimethylcyclopropanecarboxylate, known as permethrin,
b) (*RS*)-cyano-3-phenoxybenzyl (1*RS*)-*cis,trans*-3-(2,2-dichlorovinyl)-2,2-dimethylcyclopropanecarboxylate, known as cypermethrin,
c) Cypermethrin isomers, such as:
   i. deltamethrin,
   ii. alpha-cypermethrin,
   iii. beta-cypermethrin, or
   iv. zeta-cypermethrin,
d) (*RS*)-α-cyano-3-phenoxybenzyl (1*RS*,3*RS*)-3-[(*Z*)-2-chloro-3,3,3-trifluoropropenyl]-2,2-dimethylcyclopropanecarboxylate, known as cyhalothrin
e) Cyhalothrin isomers, such as lambda-cyhalothrin,
f) 2-methyl-3-phenylbenzyl(1*RS)*-*cis*-3-(2-chloro-3,3,3-trifluoro1-propenyl)-2,2-dimethylcyclopropanecarboxylate, known as bifenthrin,
g) (*S*)-α-cyano-3-phenoxibenzyl (*S*)-2-(4-chlorophenyl)-3-methyl butyrate, known as esfenvalerate,
h) (*RS*)-α-cyano-(3-phenoxyphenyl)methyl *N*-[2-chloro 4-(trifluoromethyl)phenyl]-DL-valinate, known as fluvalinate, and
i) (RS)-3-allyl-2-methyl-4-oxo cyclopenten-2-yl (1*R)-cis,trans-*chrysanthemate, known as aletrine.

Alternatively, in the device of the present invention other compounds such as organophosphorous, carbamate, neonicotinoid, diamide, benzoylurea, pyrrole, avermectin compounds or any other mixtures thereof can also be used as said one or more toxic agents.

Said toxic compounds can be dispensed in pure state (i.e. without diluting, in the case of a liquid semiochemical compound), or dissolved in a solvent, which contributes to the dragging of the semiochemical itself. In this second case, dilution is a factor that must be taken into account in determining the emission rate.

Given that said toxic compounds normally are not significantly volatile, in a preferred embodiment these compounds, in the context of the invention, are used dissolved in a solvent. As such, it favours the continuous impregnation of said at least passage regulating means by these toxic compounds since the solvent drags these non-volatile or hardly volatile compounds, thus ensuring a controlled replacement of toxic compounds on the surface of the passage regulating means, that the attracted arthropods move close to, thus causing the death thereof.

Optionally, the device of the present invention can comprise an amount of one or more compounds selected from among the group comprising antioxidants, repellent agents, UV radiation protectors or colourants, wherein said amount of one or more compounds is in a ratio comprised between 0.1:1 and 1000:1 by weight with respect to the total weight of each one of the control agents.

Furthermore, the passage regulating means defines a specific controlled release and/or delivery surface of said at least two control agents. Controlling the emission is crucial for maximising the trapping of arthropods, for both monitoring techniques and attraction and damage techniques, and as a result, in order to ensure the success of the possible treatments or techniques applied to combat certain insect pests.

Preferably, said at least one passage regulating means can be a membrane. More preferably, said at least one passage regulating means is a membrane that at least partially covers the surface of the device, and can be linked to said one or more fluid communication means, thus defining a controlled release and/or delivery surface of said at least two control agents. Still more preferably, said at least one passage regulating means is a membrane that fully covers the surface of the device, and can be linked to said one or more fluid communication means, thus defining a controlled release and/or delivery surface of said at least two control agents. This membrane can be affixed or glued, or alternatively, thermosealed, to the surface of the device, although only the emission of the control agents is carried out in the portion of the membrane that is linked to the one or more fluid communication means. In a preferred embodiment, said membrane is thermosealed to the surface of the device.

The selection of said regulating means can also exert a significant effect on the emission rates, which are defined by the nature of said at least two control agents (e.g. evaporation, compound in pure liquid state, compound in solution, mixtures).

Said at least one passage regulating means of said two or more control agents used in the present device of the invention is preferably made of a material selected from among polymers, copolymers, cellulose derivatives, polymeric matrices, synthetic fibres or any of the mixtures thereof.

More preferably, said at least one passage regulating means is made of a material selected from among polymers, copolymers or any of the mixtures thereof. Still more preferably, said at least one passage regulating means is made of a material selected from among cellulose acetate, cellulose acetate butyrate, cellulose triacetate, polyvinyl acetate, polyvinyl alcohol, butyl rubber, ethylene propylene rubber, natural rubber, nitrile rubber (i.e. acrylonitrile butadiene rubber), cellophane, celluloid, polyvinyl chloride, cyclic olefin copolymer, ethylene tetrafluoroethylene copolymer, ethylene-vinyl acetate copolymer, styrene-butadiene copolymer, thermoplastic polyurethane copolymer, polyether polyamide copolymer, polyester copolymer, polyamides, polychloroprene, polyethylene terephthalate, polylactic acid, polyacrylonitrile, polybutadiene, polybutylene, polycaprolactone, polystyrene, polyethylene glycol, polyethylene, polypropylene, polyurethane, poloxamers, resins, silicones or any of the mixtures thereof. Even more preferably, said at least one passage regulating means is made of a material that is selected from among the group consisting of cellulose acetate butyrate, polyvinyl acetate, butyl rubber, ethylene propylene rubber, nitrile rubber, polyvinyl chloride, polyether polyamide copolymer, polylactic acid, polybutadiene, polycaprolactone, polyethylene, polypropylene, polyethylene terephthalate, polyurethane, poloxamers, resins, silicones or any of the mixtures thereof.

In a preferred embodiment, said at least one passage regulating means is configured to release and/or deliver in a controlled manner said at least two control agents with an average flow of each one of them comprised between 1 ng/day and 10 g/day. More preferably, said at least one passage regulating means is configured to release and/or deliver in a controlled manner said at least two control agents wherein said at least one semiochemical compound and said at least one toxic compound are released at different rates to each other. In a particular embodiment of the invention, said at least one passage regulating means is configured to release and/or deliver in a controlled manner said at least one semiochemical compound with an average flow comprised between 1 ng/day and 1 g/day, and said at least one toxic compound with an average flow comprised between 1 ng/day and 5 g/day. Still more preferably, said at least one passage regulating means is configured to release and/or deliver in a controlled manner said at least one semiochemical compound with an average flow comprised between 1 ng/day and 500 mg/day, and said at least one toxic compound with an average flow comprised between 1 ng/day and 1 g/day. According to the invention, said at least one passage regulating means is configured to release and/or deliver in a controlled manner said at least one semiochemical compound with an average flow comprised between 1 ng/day and 10 g/day, and said at least one toxic compound with an average flow comprised between 1 ng/day and 25 mg/day.

The selection of the material of said regulating means is essential for obtaining a specific emission rate that is substantially constant, thus enabling a delivery that is maintained over time that contributes to ensuring the effectiveness of the treatments, i.e. the diffusion of the compounds throughout the entire period required to apply the attraction and death, or monitoring, technique until the completion thereof.

Moreover, the thickness of the same is also important for achieving the desired diffusion rate of the semiochemical and toxic compounds to the exterior. As such, and particularly, said at least one passage regulating means can have a thickness comprised between 1 µm and 25 mm. More preferably, said passage regulating means has a thickness comprised between 20 µm and 200 µm, and still more preferably, said passage regulating means has a thickness comprised between 20 µm and 100 µm.

Moreover, said at least one passage regulating means can be sheet shaped (*i.e. film*), perforated on the entire surface thereof or partially, or perforated sheet shaped (*i*.*e*. perforated *film*) on the entire surface thereof or partially, with any of the aforementioned materials, or any of the mixtures thereof.

Particularly, said at least one passage regulating means can comprise a plurality of pores with a diameter comprised between 1 µm and 1 mm.

In a preferred embodiment, said at least one passage regulating means of the invention has a thickness comprised between 20 µm and 200 µm; more preferably, said thickness is comprised between 20 µm and 100 µm.

It is clear for a person skilled in the art that it is possible to use highly volatile control agents. Alternatively, the semiochemical compounds can be emitted in the form of a dilution with a substance that is not volatile, such as paraffin, achieving an exponential emission rate. Therefore, in a preferred embodiment, several passage regulating means can be combined or superimposed, these passage regulating means can be made of different materials and have different thicknesses, depending on the desired emission/diffusion rate and on the properties of the control agents in use.

Optionally, the device described herein can comprise an amount of one or more compounds selected from among the group comprising antioxidants, repellent agents, UV radiation protectors (i.e. photoprotectors), penetrants or colourants, wherein said amount of one or more compounds is in a ratio comprised between 0.1:1 and 1000:1 by weight with respect to the total weight of each one of the control agents. The use of antioxidants and UV radiation protectors are especially advantageous when the device of the invention is used with at least one volatile semiochemical compound given that this type of product is unstable due to the structure thereof, and tends to degrade in the presence of UV light and oxygen.

Given that these devices of the present invention are especially intended to be used for controlling arthropods in crops, in a preferred embodiment these comprise hooking and hanging means. This enables, for example, the placement thereof on a tree branch, fence, wire, etc. depending on the technical needs of each treatment.

The device of the present invention is also especially safe from the point of view of the handling thereof by the handling technician or agent that transports and/or places the device at the point of use, since it comprises activation means of said at least one passage regulating means configured for the controlled actuation thereof, which thus prevent direct contact with toxic chemical compounds, and therefore potentially harmful for health, given that they are configured to confine the control agents until the moment of controlled actuation thereof.

As such, the device of the present invention comprises activation means of said at least one passage regulation means configured for the controlled actuation thereof, wherein said controlled actuation can be manual or automatic actuation.

Preferably, said controlled actuation can be an electromechanical automatic actuation. An example of activation means of said at least one passage regulator, configured for the automatic actuation thereof can be, in a non-limiting manner, an automatic control valve that carries out a controlled and periodic release of the control agents, from said at least container (2, 2') to said at least one passage regulating means.

In a particularly preferred embodiment, said activation means are configured for the manual controlled actuation thereof, and comprise an aluminium sheet or *film,* which at least partially covers the outer surface of the device of the present invention. In a still more preferred embodiment, said activation means configured for the manual controlled actuation thereof comprise an aluminium sheet or *film,* which at least partially covers the outer surface of the device and in turn comprises a tab configured to remove or peel said aluminium sheet or *film* from the device, thus enabling the initiation of the controlled release and/or controlled delivery of said at least two control agents.

Furthermore, the device of the present invention can optionally comprise one or more outer surfaces with a colour suitable for producing a chromatic synergistic effect in attracting arthropods. In this way, the target arthropod is a attracted both by the attraction of the control agents and through a colour of the outer surface that is especially attractive for the insect, making it approach and thus fall under the effects of the emitted agents. Said colours tend to be usually be blue, red, white and yellow, the latter being especially preferred.

The number of advantages provided by the devices of the present invention are evident for a person skilled in the art, both from the point of view of the effectiveness of the monitoring, disruption, mass trapping or attraction and damage techniques and of the safety of the applicator, or of an economical aspect, due to the savings in the amount of semiochemical compounds, particularly pheromones and/or toxic compounds used, along with the undeniable environmental benefits derived from these advantages.

A second aspect of the present invention relates to the use of the device of the present invention for controlling arthropods, which comprises the simultaneous controlled release and/or controlled delivery of at least two arthropod control agents, of which at least one is a semiochemical compound and at least one is a toxic compound.

In a preferred embodiment of said use, said simultaneous controlled release and/or controlled delivery of at least two arthropod control agents is produced with an average flow of each one of them comprised between 1 ng/day and 10 g/day. The average flow of each one of said at least two control agents, particularly said at least one semiochemical compound and said at least one toxic compound can be different to each other, meaning that in a still more preferred embodiment, said at least one semiochemical compound is released and/or delivered in a controlled manner with an average flow comprised between 1 ng/day and 1 g/day, and said at least one toxic compound is released and/or delivered in a controlled manner with an average flow between 1 ng/day and 5 g/day. Even more preferably, this use comprises a controlled release and/or controlled delivery of said at least one semiochemical compound with an average flow comprised between 1 ng/day and 500 mg/day, and of said at least one toxic compound with an average flow comprised between 1 ng/day and 1 g/day.

Throughout the description and claims, the word "comprise" and the variants of the word such as "contain" are not intended to exclude other technical characteristics, additions, components or steps. Other additional characteristics and advantages, derived from the device for the simultaneous controlled release and/or controlled delivery of at least two control agents of the invention, as well as the use thereof for controlling arthropods described herein, will become clear in light of the description of a preferred, but non-limiting, embodiment, described below and is illustrated in the accompanying drawings.

### Brief description of the drawings

- Figure 1.: First front view of a device for the simultaneous controlled release and/or controlled delivery of at least two control agents for controlling arthropods, according to the present invention (activation means not shown in the figure).
- Figure 2.: Second front view of a device for the simultaneous controlled release and/or controlled delivery of at least two control agents for controlling arthropods, according to the present invention, according to an embodiment that comprises an activation means configured for the manual actuation thereof.
- Figure 3.: Side view of a device for the simultaneous controlled release and/or controlled delivery of at least two control agents for controlling arthropods, according to the present invention, in an inactive state.
- Figure 4.: Side view of a device for the simultaneous controlled release and/or controlled delivery of at least two control agents for controlling arthropods, according to the present invention, in an active state.

### Description of a preferred embodiment

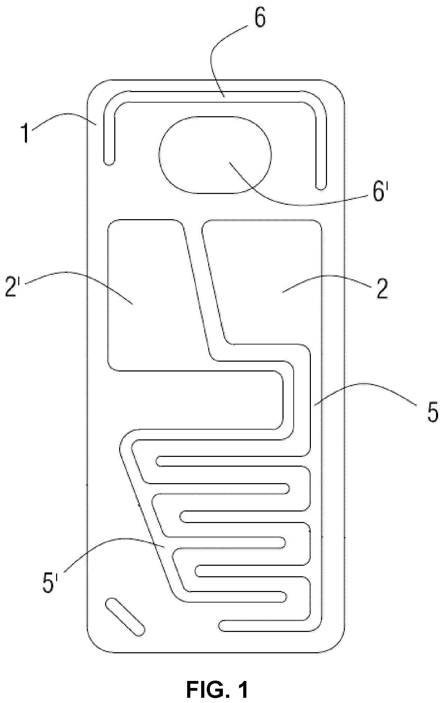

Figures 1-4, and the numbering adopted therein, show a preferred exemplary embodiment of the invention, which comprises the parts and elements indicated and described in detail below.

As can be seen in Figures 1-4, one embodiment of the device (1) for the simultaneous controlled release and/or controlled delivery of at least two control agents (not shown in the figure) for controlling arthropods, of which at least one is a semiochemical compound and at least one is a toxic compound, comprises two containers (2, 2') that contain the control agents, a passage regulating means (3) of said two or more control agents, and activation means (4) of said passage regulating means (3).

Additionally, each one of the containers (2, 2') comprises a fluid communication means (5, 5') with said passage regulating means (3). Said fluid communication means (5, 5') are configured to facilitate the transfer of fluids, particularly of the control agents used for the controlled release and/or controlled delivery, from each one of the containers (2, 2') to the passage regulating means (3). Said at least one passage regulating means (3) defines a controlled release and/or delivery surface of said at least two control agents, and has a thickness comprised between 1 µm and 25 mm. As follows from the description, said passage regulating means (3) is preferably a membrane that at least partially covers the surface of the device, and can be linked to the one or more fluid communication means (5, 5').

Said device is configured to release and/or deliver in a controlled manner said at least two control agents with an average flow of each one of them comprised between 1 ng/day and 10 g/day.

In this preferred embodiment of the invention, and as exemplified in Figure 1, this device comprises hooking or hanging means (6, 6') of the device (1), intended to facilitate the placement thereof at the point of use, e.g. a tree branch, post, fence, or wire, depending on the technical solution required according to the target arthropod species, whether for the attraction and death treatment or for monitoring.

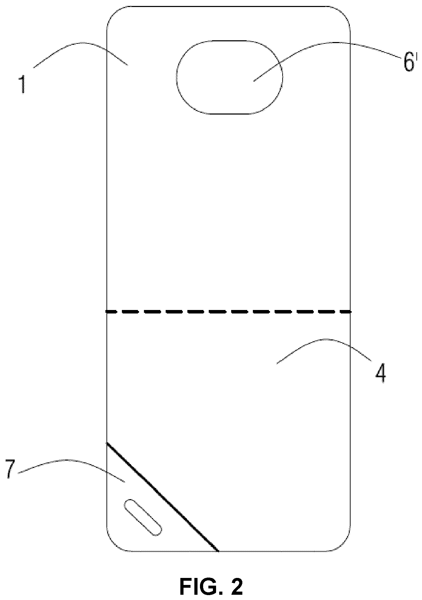

As can be seen in Figure 2, the device of this preferred embodiment comprises activation means (4) that enable said device to be transported to the point of use in complete safety, preventing the leakage of any of the toxic chemicals and/or semiochemical compounds, and also reducing the risk of contact with said products for the personnel responsible for handling them. Said activation means (4) comprise, in this preferred embodiment, an aluminium sheet or *film* that at least partially covers the outer surface of the device, and which in turn comprises a tab (7) configured to manually remove or peel said aluminium sheet or *film* from the device, thus enabling the initiation of the controlled release and/or controlled delivery of said at least two control agents.

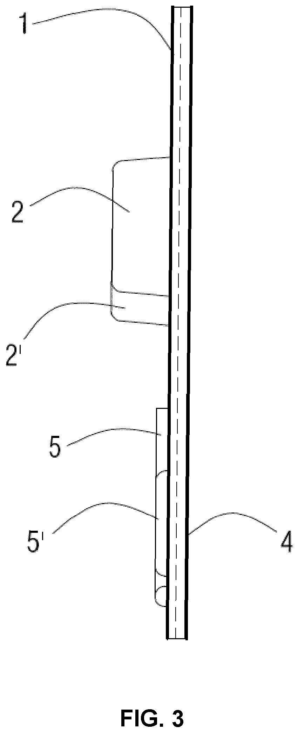

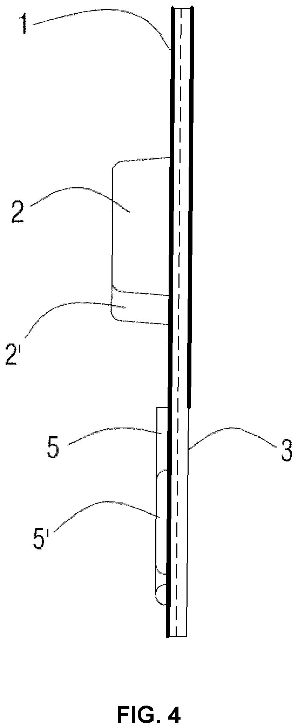

Figures 3 and 4 show two side views of the device of the present invention, wherein the first shows the device of the invention, according to this preferred embodiment, in an inactive state, that is, without having carried out the controlled actuation of the activation means (4) of said passage regulating means (3), which in this case correspond to an aluminium sheet or film that at least partially covers the outer surface of the device (1). On the other hand, Figure 4 shows another side view of the same device, that is, after having carried out the controlled actuation of the activation means (4), which corresponds to removing or peeling the aluminium sheet or film that at least partially covers the outer surface of the device (1).

### Examples

### Ex. 1 Laboratory evaluation of the effect of the toxic control agent -Evaluation of the initial toxic effect

The initial insecticide effect ("time = 0 days") provided by the control devices was evaluated, the toxic control agent being deltamethrin and using different passage regulators, as detailed in Table 1. The devices were loaded with a limonene solution as a solvent and with the following composition of toxic agent and optional additives expressed in m/m: toxic agent (0.5 %), antioxidant agent (0.1 %), penetrant (0.15 %), UV radiation protector and photoprotector (0.15 %). The initial insecticide effect ("time = 0 days") is considered to be obtained when the devices have lost 5% of their initial load by weight, such that the toxic control agent has been in contact with the entire surface of the passage regulator.

Methodology:
The mortality tests were carried out in the Centre for Agricultural Chemical Ecology (CEQA) of the Technical University of Valencia (UPV) and were carried out on two arthropod species: *Aonidiella aurantii* (Hemiptera: Diaspididae) and *Ceratitis capitata* (Diptera: Tephritidae). In the case of *A. aurantii*, males that emerged from infested lemons of the Insectarium of the Plant Protection Department (Generalitat Valenciana), located in Almassora (Castell6n), were used. In the tests with C. *capitata,* individuals from the colony kept at the CEQA itself were used.
- *Aonidiella aurantii*: The mortality evaluation protocol used is the following: 10 males of *A. aurantii* are deposited, with the help of a fine brush, on each one of the devices detailed in Table 1, contained inside a Petri dish, and contact is enabled with the same for 10 seconds. After this time, the males are deposited on new Petri dishes. Subsequently, the number of males that have died are counted at 1, 3 and 24 hrs after contact with the device. The experiment is carried out three times with each one of the devices to be evaluated.
- *Ceratitis capitata*: The mortality evaluation protocol used is the following: 10 individuals (5 females and 5 males) of C. *capitata,* previously knocked unconscious by cold, are deposited on each one of the devices detailed in Table 1, inside small methacrylate cages, and contact is enabled with the same for 10 seconds. After this time, the device is removed and the individuals are kept in the cage. Subsequently, the number of flies that have died are counted at 1, 3 and 24 hrs after contact with the device. The experiment is carried out three times with each one of the devices to be evaluated.

The average mortality percentage provided by each one of the devices was compared by means of an analysis of variance (ANOVA; LSD test for comparing averages, P<; 0.05). Previously, the data were subjected to angular transformation (asin(Vx)) to standardise the variance.

Results:
The results shown on Table 1 indicate that the invention enables toxic control agent to act on the studied arthropods and provides an effective insecticide effect with mortality values higher than 90% with all the evaluated passage agents. There are no significant differences with respect to the control consisting of a deltamethrin formulation that impregnates a PET sheet, to affect both males of *A. aurantii* (F = 0.38; gl = 4.10; P = 0.82) and individuals of C. *capitata* (F = 0.88; gl = 4.10; P = 0.51)

**Table 1. Characteristics of the tested devices and results of the mortality tests that evaluate the initial effect of the toxic control agent**

| | **Toxic control agent** | **Passage regulator** | **Contact time (s)** | **% mortality (*A. aurantii*)** | **% mortality (*C*. *capitata*)** |
|---|---|---|---|---|---|
| 1 | Deltamethrin | PE (20 µm) | 10 | 100.0 a | 100.0 a |
| 2 | Deltamethrin | PP (30 µm) | 10 | 96.7 a | 93.3 a |
| 3 | Deltamethrin | PEBA (100 µm) | 10 | 96.7 a | 96.7 a |
| 4 | Deltamethrin | Microporo us polyolefin (150 µm) | 10 | 100.0 a | 93.3 a |
| Control | Deltamethrin | - | 10 | 96.7 a | 96.7 a |

### Ex. 2 -Laboratory evaluation of the effect of the toxic control agent -Evaluation of the toxic effect over time

The insecticide effect provided by the control device, with the same characteristics as detailed in Example 1, was evaluated after having been exposed to real field conditions for 100, 200 and 400 days.

Methodology:
Exactly the same methodology was used as in that described in example E.1.1, but with devices aged in the field.

Results:
The results shown below indicate that the invention enables the regulation and replacement of the toxic control agent in a manner that does not significantly lose the toxicity effect on the studied arthropods. In contrast, the impregnated formula used as a reference control does significantly lose damage effectiveness for *A. aurantii* after 400 days of exposure in real field conditions (F = 3.18; gl = 4.10; P = 0.063). In the case of C. *capitata,* the reduction in the effectiveness observed even after 200 days of aging (F = 3.63; gl = 4.10; P = 0.045), but it is more acute after 400 days (F = 6.45; gl = 4.10; P = 0.008).

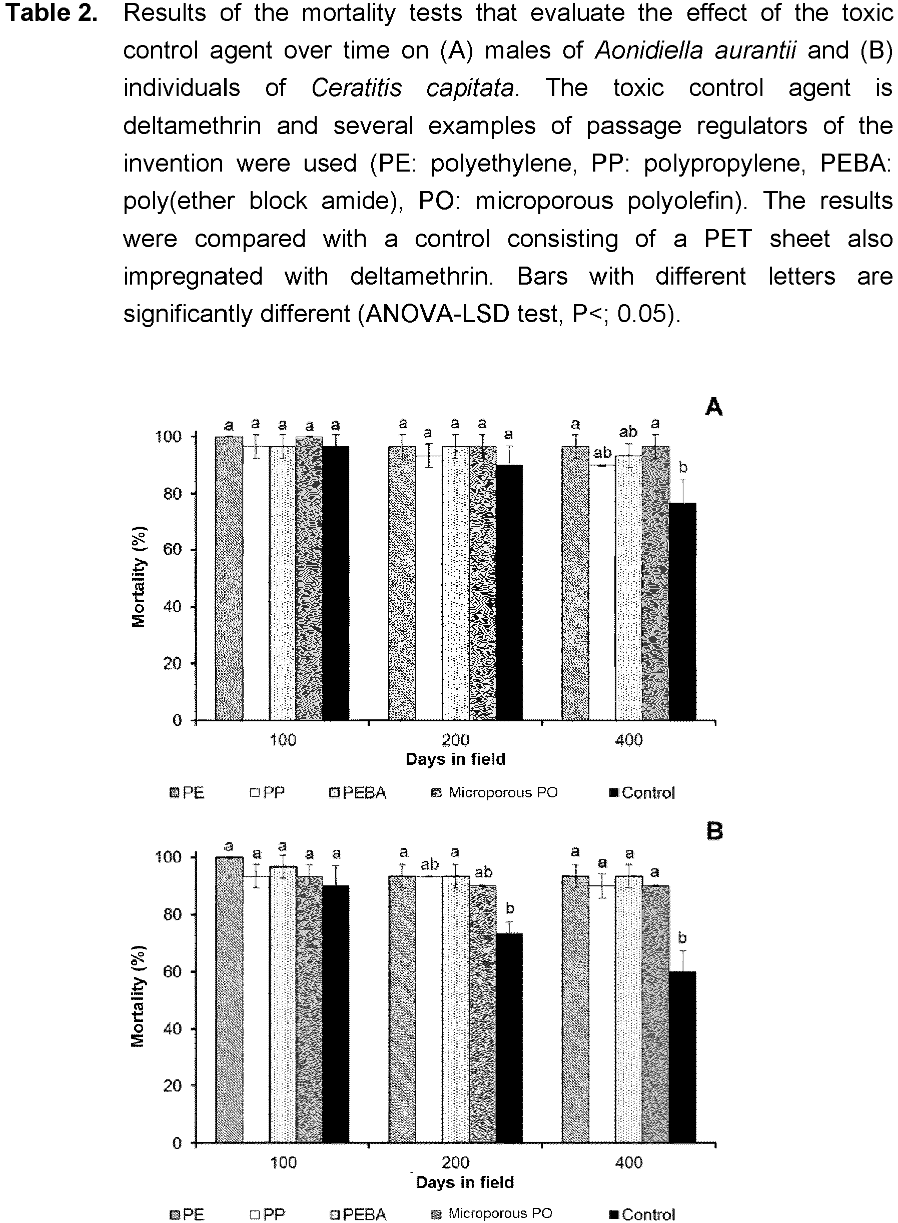

## Claims

1. A device (1) for the simultaneous controlled release and/or controlled delivery of at least two control agents for combating arthropods, of which at least one is a semiochemical compound and at least one is a toxic compound, **characterised in that** it comprises at least one container (2, 2') containing the control agents, at least one passage regulating means (3) of said two or more control agents, and activation means (4) of said at least one passage regulating means (3), wherein:
- said at least one container (2, 2') comprises one or more fluid communication means (5, 5') configured to enable the transfer of fluids between said at least one container (2, 2') and said at least one passage regulating means (3),
- said at least one passage regulating means (3) defines a controlled release and/or delivery surface of said at least two control agents,
- said activation means (4) are configured for the controlled actuation thereof,
- said toxic compound is selected from among the group consisting of insecticides that act on the growth and development of insects, insecticides that act on the nervous or muscle system of insects, insecticides that act on the respiration of insects, insecticides that act on the digestive system of insects and insecticides with non-specific inhibitors or any of the combinations thereof; and
- said at least one passage regulating means is configured to release and/or deliver in a controlled manner said at least one semiochemical compound with an average flow comprised between 1 ng/day and 10 g/day, and said at least one toxic compound with an average flow comprised between 1 ng/day and 25 mg/day.

2. The device according to claim 1, wherein said at least one passage regulating means (3) is made of a material selected from among polymers, copolymers, cellulose derivatives, polymeric matrices, synthetic fibres or any of the mixtures thereof.

3. The device according to claim 2, wherein said at least one passage regulating means (3) is made of a material selected from among cellulose acetate, cellulose acetate butyrate, cellulose triacetate, polyvinyl acetate, polyvinyl alcohol, butyl rubber, ethylene propylene rubber, natural rubber, nitrile rubber, cellophane, celluloid, polyvinyl chloride, cyclic olefin copolymer, ethylene tetrafluoroethylene copolymer, ethylene-vinyl acetate copolymer, styrene-butadiene copolymer, thermoplastic polyurethane copolymer, polyether polyamide copolymer, polyester copolymer, polyamides, polychloroprene, polyethylene terephthalate, polylactic acid, polyacrylonitrile, polybutadiene, polybutylene, polycaprolactone, polystyrene, polyethylene glycol, polyethylene, polypropylene, polyurethane, poloxamers, resins, silicones or any of the mixtures thereof.

4. The device according to any of claims 1-3, wherein said at least one passage regulating means (3) has a thickness comprised between 1 µm and 25 mm.

5. The device according to any of claims 1-4, wherein said at least one passage regulating means (3) has a thickness comprised between 20 µm and 200 µm.

6. The device according to any of claims 1-5, wherein said controlled activation means (4) are configured for the controlled actuation thereof, wherein said controlled actuation is a manual actuation or an automatic actuation.

7. The device according to any of claims 1-6, which comprises hooking or hanging means (6, 6') of the device (1).

8. The device according to any of claims 1-7, which comprises one or more outer surfaces with a colour suitable for producing a chromatic synergistic effect in attracting arthropods.

9. The device according to any of claims 1-8, which comprises an amount of one or more compounds selected from among the group comprising antioxidants, repellent agents, UV radiation protectors, penetrants and colourants, wherein said amount of one or more compounds is in a ratio comprised between 0.1:1 and 1000:1 by weight with respect to the total weight of each one of the control agents.

10. A use of a device as defined in claims 1-9, **characterised by** a simultaneous controlled release and/or controlled delivery of at least two arthropod control agents, of which at least one is a semiochemical compound and at least one is a toxic compound.

## Patentansprüche

1. Vorrichtung (1) zur gleichzeitigen gesteuerten Freisetzung und/oder gesteuerten Abgabe von mindestens zwei Bekämpfungsmittel zur Bekämpfung von Arthropoden, von denen mindestens einer eine semiochemische Verbindung und mindestens einer eine toxische Verbindung ist, **dadurch gekennzeichnet, dass** sie mindestens einen Behälter (2, 2'), der die Bekämpfungsmittel enthält, mindestens ein Durchlassregulierungsmittel (3) für die zwei oder mehr Wirkstoffe und Aktivierungsmittel (4) für das mindestens eine Durchlassregulierungsmittel (3) umfasst, wobei:
- der mindestens eine Behälter (2, 2') ein oder mehrere Fluidverbindungsmittel (5, 5') umfasst, die konfiguriert sind, um den Transfer von Fluiden zwischen dem mindestens einen Behälter (2, 2') und dem mindestens einen Durchgangsregulierungsmittel (3) zu ermöglichen,
- das mindestens eine Durchgangsregulierungsmittel (3) eine gesteuerte Freisetzungs- und/oder Abgabefläche für die mindestens zwei Bekämpfungsmittel definiert,
- die Aktivierungsmittel (4) für ihre gesteuerte Betätigung konfiguriert sind,
- die toxische Verbindung ausgewählt ist aus der Gruppe bestehend aus Insektiziden, die auf das Wachstum und die Entwicklung von Insekten einwirken, Insektiziden, die auf das Nerven- oder Muskelsystem von Insekten einwirken, Insektiziden, die auf die Atmung von Insekten einwirken, Insektiziden, die auf das Verdauungssystem von Insekten einwirken, und Insektiziden mit unspezifischen Inhibitoren oder einer der Kombinationen davon; und
- wobei: das mindestens eine Durchflussregulierungsmittel konfiguriert ist, um die mindestens eine semiochemische Verbindung mit einem durchschnittlichen Durchfluss zwischen 1 ng/Tag und 10 g/Tag und die mindestens eine toxische Verbindung mit einem durchschnittlichen Durchfluss zwischen 1 ng/Tag und 25 mg/Tag in gesteuerter Weise freizusetzen und/oder abzugeben.

2. Vorrichtung nach Anspruch 1, wobei das mindestens eine Durchgangsregulierungsmittel (3) aus einem Material besteht, das aus Polymeren, Copolymeren, Zellulosederivaten, Polymermatrizen, synthetischen Fasern oder beliebigen Mischungen davon ausgewählt ist.

3. Vorrichtung nach Anspruch 2, wobei das mindestens eine Durchgangsregulierungsmittel (3) aus einem Material besteht, das ausgewählt ist aus Celluloseacetat, Celluloseacetatbutyrat, Cellulosetriacetat, Polyvinylacetat, Polyvinylalkohol, Butylkautschuk, Ethylen-Propylen-Kautschuk, Naturkautschuk, Nitrilkautschuk, Cellophan, Celluloid, Polyvinylchlorid, zyklischem Olefin-Copolymer, Ethylen-Tetrafluorethylen-Copolymer, Ethylen-Vinylacetat-Copolymer, Styrol-Butadien-Copolymer, thermoplastisches PolyurethanCopolymer, Polyether-Polyamid-Copolymer, Polyester-Copolymer, Polyamide, Polychloropren, Polyethylenterephthalat, Polymilchsäure, Polyacrylnitril, Polybutadien, Polybutylen, Polycaprolacton, Polystyrol, Polyethylenglykol, Polyethylen, Polypropylen, Polyurethan, Poloxamere, Harze, Silikone oder eine ihrer Mischungen.

4. Vorrichtung nach einem der Ansprüche 1 bis 3, wobei das mindestens eine Durchgangsregulierungsmittel (3) eine Dicke zwischen 1 µm und 25 mm aufweist.

5. Vorrichtung nach einem der Ansprüche 1-4, wobei das mindestens eine Durchgangsregulierungsmittel (3) eine Dicke zwischen 20 µm und 200 µm aufweist.

6. Vorrichtung nach einem der Ansprüche 1 bis 5, wobei die gesteuerten Aktivierungsmittel (4) für ihre gesteuerte Betätigung konfiguriert sind, wobei die gesteuerte Betätigung eine manuelle Betätigung oder eine automatische Betätigung ist.

7. Vorrichtung nach einem der Ansprüche 1 bis 6, die Mittel zum Einhaken oder Aufhängen (6, 6') der Vorrichtung (1) umfasst.

8. Vorrichtung nach einem der Ansprüche 1-7, die eine oder mehrere Außenflächen mit einer Farbe umfasst, die geeignet ist, einen chromatischen Synergieeffekt beim Anlocken von Arthropoden zu erzeugen.

9. Vorrichtung nach einem der Ansprüche 1 bis 8, die eine Menge einer oder mehrerer Verbindungen umfasst, die aus der Gruppe ausgewählt sind, die Antioxidantien, Repellentien, UV-Strahlenschutzmittel, Penetrationsmittel und Farbstoffe umfasst, wobei die Menge der einen oder mehreren Verbindungen in einem Verhältnis zwischen 0,1:1 und 1000:1 nach Gewicht in Bezug auf das Gesamtgewicht jedes der Bekämpfungsmittel enthalten ist.

10. Verwendung einer Vorrichtung nach einem der Ansprüche 1 bis 9, **gekennzeichnet durch** eine gleichzeitige gesteuerte Freisetzung und/oder gesteuerte Abgabe von mindestens zwei Arthropoden-Bekämpfungsmitteln, von denen mindestens eines eine semiochemische Verbindung ist und mindestens eines eine toxische Verbindung ist.

## Revendications

1. Dispositif (1) pour la libération contrôlée et/ou l'administration contrôlée simultanée d'au moins deux agents de contrôle pour lutter contre les arthropodes, dont au moins un est un composé sémiochimique et au moins un est un composé toxique, **caractérisé en ce qu'**il comprend au moins un récipient (2, 2') contenant les agents de contrôle, au moins un moyen de régulation de passage (3) desdits deux ou plusieurs agents de contrôle, et des moyens d'activation (4) dudit au moins un moyen de régulation de passage (3), dans lequel :
- ledit au moins un récipient (2, 2') comprend un ou plusieurs moyens de communication fluidique (5, 5') configurés pour permettre le transfert de fluides entre ledit au moins un récipient (2, 2') et ledit au moins un moyen de régulation de passage (3),
- ledit au moins un moyen de régulation de passage (3) définit une surface de libération et/ou d'administration contrôlée desdits au moins deux agents de contrôle,
- lesdits moyens d'activation (4) sont configurés pour l'actionnement contrôlé de ceux-ci,
- ledit composé toxique est choisi dans le groupe constitué d'insecticides agissant sur la croissance et le développement des insectes, d'insecticides agissant sur le système nerveux ou musculaire des insectes, d'insecticides agissant sur la respiration des insectes, d'insecticides agissant sur le système digestif des insectes et d'insecticides avec des inhibiteurs non spécifiques ou l'un quelconque des combinaisons de ceux-ci ; et
- ledit au moins un moyen de régulation de passage est configuré pour libérer et/ou administrer de manière contrôlée ledit au moins un composé sémiochimique avec un débit moyen compris entre 1 ng/jour et 10 g/jour, et ledit au moins un composé toxique avec un débit moyen compris entre 1 ng/jour et 25 mg/jour.

2. Dispositif selon la revendication 1, dans lequel ledit au moins un moyen de régulation de passage (3) est constitué d'un matériau choisi parmi les polymères, les copolymères, les dérivés cellulosiques, les matrices polymériques, les fibres synthétiques ou l'un quelconque des mélanges de ceux-ci.

3. Dispositif selon la revendication 2, dans lequel ledit au moins un moyen de régulation de passage (3) est constitué d'un matériau choisi parmi l'acétate de cellulose, le butyrate d'acétate de cellulose, le triacétate de cellulose, l'acétate de polyvinyle, l'alcool polyvinylique, le caoutchouc butyle, le caoutchouc d'éthylène propylène, le caoutchouc naturel, le caoutchouc nitrile, la cellophane, le celluloïd, le chlorure de polyvinyle, le copolymère d'oléfine cyclique, le copolymère d'éthylène et de tétrafluoroéthylène, le copolymère d'éthylène-acétate de vinyle, le copolymère de styrène-butadiène, le copolymère de polyuréthane thermoplastique, le copolymère de polyéther polyamide, le copolymère de polyester, les polyamides, le polychloroprène, le polyéthylène téréphtalate, l'acide polylactique, le polyacrylonitrile, le polybutadiène, le polybutylène, la polycaprolactone, le polystyrène, le polyéthylène glycol, le polyéthylène, le polypropylène, le polyuréthane, les poloxamères, les résines, les silicones ou l'un quelconque des mélanges de ceux-ci.

4. Dispositif selon l'une quelconque des revendications 1 à 3, dans lequel ledit au moins un moyen de régulation de passage (3) a une épaisseur comprise entre 1 µm et 25 mm.

5. Dispositif selon l'une quelconque des revendications 1 à 4, dans lequel ledit au moins un moyen de régulation de passage (3) a une épaisseur comprise entre 20 µm et 200 µm.

6. Dispositif selon l'une quelconque des revendications 1 à 5, dans lequel lesdits moyens d'activation contrôlés (4) sont configurés pour l'actionnement contrôlés de ceux-ci, dans lequel ledit actionnement contrôlé est un actionnement manuel ou un actionnement automatique.

7. Dispositif selon l'une quelconque des revendications 1 à 6, qui comprend des moyens d'accrochage ou de suspension (6, 6') du dispositif (1).

8. Dispositif selon l'une quelconque des revendications 1 à 7, qui comprend une ou plusieurs surfaces externes avec une couleur appropriée pour produire un effet synergique chromatique pour attirer les arthropodes.

9. Dispositif selon l'une quelconque des revendications 1 à 8, qui comprend une quantité d'un ou plusieurs composés choisis parmi le groupe comprenant les antioxydants, les agents répulsifs, les protecteurs de rayonnement UV, les pénétrants et les colorants, dans lequel ladite quantité d'un ou plusieurs composés est dans un rapport compris entre 0,1:1 et 1000:1 en poids par rapport au poids total de chacun des agents de contrôle.

10. Utilisation d'un dispositif selon les revendications 1 à 9, **caractérisée par** une libération contrôlée et/ou une administration contrôlée simultanées d'au moins deux agents de contrôle des arthropodes, dont au moins un est un composé sémiochimique et au moins un est un composé toxique.
